(19) Europäisches Patentamt
European Patent Office
Office européen des brevets

(11) **EP 4 556 499 B1**

(12) **EUROPEAN PATENT SPECIFICATION**

(45) Date of publication and mention of the grant of the patent:
**06.05.2026 Bulletin 2026/19**

(21) Application number: **23210688.0**

(22) Date of filing: **17.11.2023**

(51) International Patent Classification (IPC):
***C08F 110/06*** *(2006.01)* ***C08L 23/12*** *(2006.01)*
***C08J 5/18*** *(2006.01)*

(52) Cooperative Patent Classification (CPC):
(C-Sets available)
**C08L 23/12; C08F 110/06; C08J 5/18;**
C08L 2203/16; C08L 2205/025; C08L 2205/03;
C08L 2205/24 (Cont.)

(54) **MULTIMODAL POLYPROPYLENE HOMOPOLYMER FOR FILM APPLICATIONS**
MULTIMODALES POLYPROPYLENHOMOPOLYMER FÜR FOLIENANWENDUNGEN
HOMOPOLYMÈRE DE POLYPROPYLÈNE MULTIMODAL POUR APPLICATIONS DE FILM

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**21.05.2025 Bulletin 2025/21**

(73) Proprietor: **Borealis GmbH**
**1020 Vienna (AT)**

(72) Inventors:
- **WANG, Jingbo**
  **4021 Linz (AT)**
- **GAHLEITNER, Markus**
  **4021 Linz (AT)**
- **BERNREITNER, Klaus**
  **4021 Linz (AT)**
- **NIEDERSUESS, Peter**
  **4021 Linz (AT)**
- **ORTNER, Stefan**
  **4021 Linz (AT)**
- **LESKINEN, Pauli**
  **06101 Porvoo (FI)**
- **AHO, Jani**
  **06101 Porvoo (FI)**

(74) Representative: **Maiwald GmbH**
**Elisenhof**
**Elisenstraße 3**
**80335 München (DE)**

(56) References cited:
**EP-A1- 2 960 279** **EP-A1- 3 912 794**
**EP-A1- 3 945 112**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 556 499 B1

(52) Cooperative Patent Classification (CPC): (Cont.)

C-Sets
**C08F 110/06, C08F 2/001;**
**C08F 110/06, C08F 4/6465;**
**C08F 110/06, C08F 4/651;**
**C08F 110/06, C08F 4/6546;**
**C08L 23/12, C08L 23/12, C08L 23/12;**
C08F 110/06, C08F 2500/12, C08F 2500/26, C08F 2500/27, C08F 2500/30, C08F 2500/33, C08F 2500/34, C08F 2500/35

## Description

### Background art

The present invention relates to a multimodal polypropylene homopolymer for film applications, a process for its production, films comprising the multimodal polypropylene homopolymer and its use for the production of films, preferably blown films.

Propylene homopolymers are very well known and quite often used in the field of film making. In this technical area polymers are required which combine high transparency, respectively low haze and high stiffness. However it is demanding to fulfill all the required demands with one polymer since the improvement of one property is paid on the expense of another property.

In the art, it is well known in this respect to improve the optical properties of a polypropylene composition by adding specific nucleating agents, also designated as clarifiers.

EP2514770A1 discloses a polypropylene composition with very high melt flow rate $MFR_2$ measured according to ISO 1133 (230 °C, 2.16 kg load) of at least 50 g/10 min, which is preferably based on a polypropylene homopolymer, produced in the presence of a phthalate containing Ziegler-Natta catalyst. The composition used in moulding and particularly the automotive business where injection moulding is the preferred conversion-process and where good mechanical properties and high thermal stability is required.

The polypropylene homopolymer is composed of 3 intermediate polypropylenes, wherein, according to the experimental part, the first intermediate polypropylene has a $MFR_2$ of at least 255 g/10 min, the second intermediate polypropylene has a $MFR_2$ of at least 41 g/10 min and the third intermediate polypropylene has a MFR of at least 5 g/10 min, in order to achieve the desired high $MFR_2$ of the final polypropylene.

Haze is not mentioned in EP2514770A1, and a polypropylene of such high $MFR_2$ would not be suitable for producing films.

EP3945112A describes in-reactor, high flow trimodal PP homopolymers with balanced mechanical property profile produced with a non-phthalate Ziegler-Natta catalyst, which are alpha-nucleated with poly(vinyl cyclohexane) (PVCH) using the BNT technology. The design of the homopolymers produced in the experimental part differs. Inventive Examples 1 and 2 are the only ones, where the $MFR_2$ of the 3 homopolymer fractions decreases from PP1 >PP2>PP3, but PP1 and PP2 both have a $MFR_2$ of above 300 g/10 min and the final $MFR_2$ of these two examples is above 200 g/10 min.

No films have been prepared, also because the $MFR_2$ was too high for that. The tensile modulus has been determined on injection moulded specimens, and haze is not mentioned at all.

Although compositions based on trimodal PP homopolymers have already been described in the prior art, there was still the need to find trimodal polypropylene homopolymer based compositions, which are suitable for producing films, especially blown films, and which combine high transparency, respectively low haze and high stiffness.

It has now been found that such compositions can be achieved by a specific polymer design of the polypropylene homopolymers together with proper external (post-reactor) nucleation.

### Summary of the Invention

Thus, the present invention is in a first aspect related to a polypropylene composition comprising:

(A) 99.0 to 99.9999 wt.-%, based on the total weight of the composition, of a trimodal polypropylene homopolymer (tPPH), the trimodal polypropylene homopolymer (tPPH) comprising (A-1) 20 to 60 wt.-%, based on the total weight of the tPPH, of a first polypropylene homopolymer fraction (PPH1) having

- a melt flow rate $MFR_2$, determined according to ISO 1133 at 230°C and a load of 2.16 kg, in the range of 1.0 to 20 g/10 min,

(A-2) 30 to 60 wt.-%, based on the total weight of the tPPH, of a second polypropylene homopolymer fraction (PPH2) having

- a melt flow rate $MFR_2$, determined according to ISO 1133 at 230°C and a load of 2.16 kg, in the range of 1.0 to 20 g/10 min,

(A-3) 1 to 15 wt.-%, based on the total weight of the tPPH, of a third polypropylene homopolymer fraction (PPH3) having

- a melt flow rate $MFR_2$, determined according to ISO 1133 at 230°C and a load of 2.16 kg, in the range of 0.1 to 5.0

g/10 min,

whereby the $MFR_2$ of the first, the second and the third polypropylene homopolymer fraction are different from each other and whereby $MFR_2$ of (PPH1) > $MFR_2$ of (PPH2) > $MFR_2$ (PPH3);

(B) 0.0001 to 1.0 wt.-%, based on the total weight of the polypropylene composition, of an alpha nucleating agent,

whereby the composition has

a melt flow rate $MFR_2$, determined according to ISO 1133 at 230°C and a load of 2.16 kg, in the range of 0.5 to 15 g/10 min,

a crystallization temperature, determined with DSC according to ISO 11357, in the range of 125 to 140°C and a flexural modulus, determine according to ISO 178 on injection molded specimens of 80 x 10 x 4 $mm^3$, prepared at a melt temperature of 230°C in accordance with EN ISO 19069-2 in the range of 1950 to 2800 MPa.

In a second aspect of the invention, the trimodal polypropylene homopolymer (tPPH) of the polypropylene composition of the first aspect is prepared by a multistage polymerization process in the presence of a Ziegler-Natta catalyst (ZN-C) comprising

a) compounds (TC) of a transition metal of Group 4 to 6 of the IUPAC Periodic Table of Elements, a Group 2 metal compound (MC) and an internal donor (ID), wherein said internal donor (ID) is a non-phthalic compound,

b) a co-catalyst (Co), and

c) optionally an external donor (ED).

Preferably, the internal donor (ID) is selected from the group consisting of malonates, maleates, succinates, glutarates, benzoates and derivatives, each optionally substituted, and/or mixtures thereof, preferably from citraconates.

The present invention further relates to the use of the above polypropylene composition for the production of films, especially blown films.

**Definitions**

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

A "polypropylene homopolymer" in the sense of this disclosure refers to a propylene polymer preferably containing not more than 1.0 wt.-% of comonomer selected from the group of ethylene and/or alpha-olefins having 4 to 10 carbon atoms. More preferably, such propylene polymers will contain less than 0.8 wt.-% or less than 0.5 wt.-% of comonomers, The propylene polymer may also be free of comonomers.

The "modality" of a polymer refers to the form of its molecular weight distribution curve, i.e. the appearance of the graph of the polymer weight fraction as function of its molecular weight. If the polymer is produced in a sequential step process, utilizing reactors coupled in series and using different conditions in each reactor, the different fractions produced in the different reactors will each have their own molecular weight distribution. When the molecular weight distribution curves from these fractions are superimposed into the molecular weight distribution curve for the total resulting polymer product, that curve will show two or more maxima or at least be distinctly broadened in comparison with the curves for the individual fractions. Such a polymer product, produced in two or more serial steps, is called bimodal or multimodal depending on the number of steps. In the following all polymers thus produced in two or more sequential steps are called "multimodal". It is noted that also the chemical compositions of the different fractions may be different.

"Catalyst system" denotes the combination of the catalyst and the co-catalyst.

It is also understood within the meaning of this disclosure that the below described embodiments may be combined.

It should be understood that any of the lower or upper limits of any of the parameters described for the preferred embodiments of the present invention can be combined with each other. Likewise, any of the lower or upper limits of any of the parameters described for the "other preferred embodiments of the present invention" can be combined with each other.

## Detailed Description of the Invention

### Polypropylene composition

It has been surprisingly found that a polypropylene composition can be achieved with leads to films with low haze in combination with high stiffness by using a non-phthalate catalyst in a multistage polymerization process and subsequent (post-reactor) nucleation. The polymer properties can be obtained by a particular multimodal, preferably trimodal polymer design.

Thus, the melt flow rate $MFR_2$ (230°C, 2.16kg, ISO 1133) of the polypropylene composition according to the present invention may range from 0.5 to 15 g/10 min, preferably from 1.0 to 10 g/10 min, more preferably from 3.0 to 8.0 g/10 min.

In addition, the polypropylene composition has a crystallization temperature Tc, determined by differential scanning calorimetry (DSC) according to ISO 11357 in the range of 125 to 140°C, preferably 127 to 140°C, more preferably 130 to 135°C.

The flexural modulus, determined in a 3-point-bending according to ISO 178 on injection molded specimens of 80 x 10 x 4 $mm^3$, prepared at a melt temperature of 230°C in accordance with EN ISO 19069-2, of the polypropylene composition is in the range of 1950 to 2800 MPa, preferably 2000 to 2700 MPa, more preferably 2100 to 2500 MPa.

The polypropylene composition may have a melting temperature (Tm), determined by differential scanning calorimetry (DSC) according to ISO 11357, is in the range of 162 to 175°C, preferably 163 to 172°C, more preferably 165 to 170°C.

The associated melting enthalpy (Hm), determined by differential scanning calorimetry (DSC), may be in the range of 90 to 130 J/g, preferably in the range of 100 to 125 J/g, more preferably in the range of 110 to 120 J/g.

The polypropylene composition according to the present invention comprises components (A), a trimodal polypropylene homopolymer (tPPH) and (B), an alpha nucleating agent.

The amount of the trimodal polypropylene homopolymer (tPPH) is in the range of 99.0 to 99.9999 wt.-%, based on the total weight of the polypropylene composition, preferably 99.3 to 99.99 wt.-%, more preferably 99.5 to 99.95 wt.-% and the amount of the alpha nucleating agent is in the range of 0.0001 to 1.0 wt.-%, preferably 0.01 to 0.7 wt.-% and more preferably 0.05 to 0.5 wt.-%.

### *Trimodal polypropylene homopolymer (tPPH)*

The polypropylene homopolymer (tPPH) of the polypropylene composition according to the invention is a trimodal polymer. Thus, in accordance with the present invention, the trimodal polypropylene homopolymer (tPPH) comprises at least three different polypropylene homopolymer fractions, differing with respect to the melt flow rate ($MFR_2$).

Therefore, the trimodal polypropylene homopolymer (tPPH) comprises:

(A-1) 20 to 60 wt.-%, based on the total weight of the tPPH, of a first polypropylene homopolymer fraction (PPH1) having

- a melt flow rate $MFR_2$, determined according to ISO 1133 at 230°C and a load of 2.16 kg, in the range of 1.0 to 20 g/10 min,

(A-2) 30 to 60 wt.-%, based on the total weight of the tPPH, of a second polypropylene homopolymer fraction (PPH2) having

- a melt flow rate $MFR_2$, determined according to ISO 1133 at 230°C and a load of 2.16 kg, in the range of 1.0 to 20 g/10 min,

(A-3) 1 to 15 wt.-%, based on the total weight of the tPPH, of a third polypropylene homopolymer fraction (PPH3) having

- a melt flow rate $MFR_2$, determined according to ISO 1133 at 230°C and a load of 2.16 kg, in the range of 0.1 to 5.0

g/10 min.

Preferably, the trimodal polypropylene homopolymer (tPPH) consists of

(A-1) 20 to 60 wt.-%, based on the total weight of the tPPH, of the first polypropylene homopolymer fraction (PPH1)
(A-2) 30 to 60 wt.-%, based on the total weight of the tPPH, of the second polypropylene homopolymer fraction (PPH2) and
(A-3) 1 to 15 wt.-%, based on the total weight of the tPPH, of the third polypropylene homopolymer fraction (PPH3).

The sum of the amounts of PPH1, PPH2 and PPH3 add up to 100 wt.-%.

More preferably, the trimodal polypropylene homopolymer tPPH consists of

(A-1) 30 to 55 wt.-%, based on the total weight of the tPPH, of the first polypropylene homopolymer fraction (PPH1)
(A-2) 40 to 60 wt.-%, based on the total weight of the tPPH, of the second polypropylene homopolymer fraction (PPH2) and
(A-3) 3 to 12 wt.-%, based on the total weight of the tPPH, of the third polypropylene homopolymer fraction (PPH3).

The sum of the amounts of PPH1, PPH2 and PPH3 add up to 100 wt.-%.

Even more preferably, the trimodal polypropylene homopolymer (t) consists of

(A-1) 40 to 52 wt.-%, based on the total weight of the tPPH, of the first polypropylene homopolymer fraction (PPH1)
(A-2) 45 to 58 wt.-%, based on the total weight of the tPPH, of the second polypropylene homopolymer fraction (PPH2) and
(A-3) 5 to 10 wt.-%, based on the total weight of the tPPH, of the third polypropylene homopolymer fraction (PPH3).

The sum of the amounts of PPH1, PPH2 and PPH3 add up to 100 wt.-%.

According to a preferred embodiment of the present invention, the first polypropylene homopolymer fraction (PPH1) has a melt flow rate $MFR_2$ (230°C, 2.16 kg, ISO 1133-1) in the range of 2.0 to 15 g/10 min, more preferably in the range of 5.0 to 12.0 g/10 min.

The second polypropylene homopolymer fraction (PPH2) preferably has a melt flow rate $MFR_2$ (230°C, 2.16kg, ISO 1133-1) in the range of 1.5 to 12 g/10 min, more preferably in the range of 2.0 to 8.0 g/10 min.

The third polypropylene homopolymer fraction (PPH3) preferably has a melt flow rate $MFR_2$ (230°C, 2.16 kg, ISO 1133-1) in the range of 0.2 to 3.0 g/10 min, more preferably in the range of 0.3 to 1.5 g/10 min.

As stated above, the $MFR_2$ of the first, the second and the third polypropylene homopolymer fraction are different from each other and whereby $MFR_2$ of (PPH1) > $MFR_2$ of (PPH2) > $MFR_2$ (PPH3).

The final $MFR_2$ (230°C, 2.16kg, ISO 1133-1) of the trimodal polypropylene homopolymer (tPPH) is preferably in the range of 0.5 to 15 g/10 min, more preferably in the range of 1.0 to 12 g/10 min and even more preferably in the range of 3.0 to 8.0 g/10 min.

The trimodal polypropylene homopolymer (tPPH) may in addition have a xylene cold soluble (XCS) content (ISO 16152; at 25°C) of less than 3.5 wt.-%, preferably 3.0 wt.-% or lower and more preferably 2.9 wt.-% or lower. The XCS content may be 0.5 wt.-%, preferably 1.0 wt.-%, more preferably 1.5 wt.-%.

Thus, preferred ranges of the XCS content are 0.5 to less than 3.5 wt.-%, more preferably 1.0 to 3.0 wt.-% and even more preferred from 1.5 to 2.9 wt.-%.

The trimodal polypropylene homopolymer (tPPH) may include suitable additives in suitable amounts, known to the art skilled person.

Preferably, such additives are selected from antioxidants, acid scavengers, UV stabilizers, slip agents, processing aids and antistatic agents and combinations thereof.

The trimodal polypropylene homopolymer (tPPH) is preferably prepared by a process as described in the following.

The trimodal polypropylene homopolymer (tPPH) of the polypropylene composition is prepared by a multistage polymerization process in the presence of a Ziegler-Natta catalyst (ZN-C) comprising

a) compounds (TC) of a transition metal of Group 4 to 6 of the IUPAC Periodic Table of Elements, a Group 2 metal compound (MC) and an internal donor (ID), wherein said internal donor (ID) is a non-phthalic compound,

b) a co-catalyst (Co), and

c) optionally an external donor (ED).

Compound a) is a solid catalyst component which comprises an internal electron donor which is a compound having the structure according to formula (I) below:

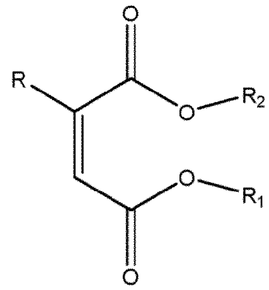

(I)

wherein $R_1$ and $R_2$; are the same or different being a linear or branched $C_1$-$C_{12}$-alkyl group and R is hydrogen or a linear, branched or cyclic $C_1$ to $C_{12}$-alkyl. Preferably $R_1$ and $R_2$ are a linear or branched $C_1$-$C_8$-alkyl group, more preferably a linear or branched $C_1$-$C_4$-alkyl group and most preferably ethyl, whereby $R_1$ and $R_2$ are preferably the same.

R is preferably not hydrogen. Especially preferably R is a linear or branched $C_1$ to $C_3$-alkyl and in particular R is methyl.

The internal donor (ID) is preferably selected from the group consisting of malonates, maleates, succinates, glutarates, benzoates and derivatives, each optionally substituted. and/or mixtures thereof, preferably from optionally substituted citraconates. A derivative is a compound that is synthesized from a parent compound by replacement of one atom with another atom or group of atoms.

The catalyst used in the present invention is a solid Ziegler-Natta catalyst, which comprises compounds of a transition metal of Group 4 to 6 of IUPAC, like titanium, a Group 2 metal compound, like magnesium and an internal donor (ID) being a non -phthalic compound, preferably a compound according to formula (I). Thus, the catalyst is free of undesired phthalic compounds.

Further, the solid catalyst is preferably free of any external support material, like silica or MgCl, but the catalyst is preferably self-supported.

The solid catalyst, preferably in particulate form is suitably obtainable by general procedures as described in WO 2017/148970 A1.

Detailed description of preparation of catalysts is also disclosed in WO-A-2012/007430, EP-A-2610271, EP-A-261027 and EP-A-2610272.

The solid catalyst component is contacted with an organoaluminum compound and an external electron donor before or when using it in polymerization. The organoaluminum compound is preferably an aluminum alkyl or aluminum alkyl halide compound. Accordingly the organoaluminum compound may be a trialkyl aluminum, like triethyl aluminum (TEAL), tri-isobutyl aluminum, trimethyl aluminum, tri-n-hexyl aluminum or tri-noctyl aluminum. It may further be alkyl aluminum chloride, such as dialkyl aluminum chloride or alkyl aluminum dichloride. Furthermore, the organoaluminum compound may be a mixture of two or more above-mentioned compounds. Especially preferably the organoaluminum compound is triethyl aluminum (TEAL).

As further preferably component of the catalyst system is an external donor (ED). The external donor is preferably a silane compound having the formula $Si(OR^{11})_nR^{10}_{4-n}$, wherein each $R^{11}$ is independently a linear or branched $C_1$-$C_4$ alkyl, preferably methyl or ethyl; and each $R^{10}$ is independently a linear or branched alkyl group having from 1 to 24 and optionally containing an atom of group 15 of periodic table of elements or comprises a cyclic group having from 6 to 12 carbon atoms. Preferably each $R^{10}$ is independently cyclohexyl, phenyl, methyl, ethyl, tert-butyl and a group having the formula $NR^{12}R^{13}$, wherein $R^{12}$ and $R^{13}$ are each independently a $C_1$-$C_{12}$-hydrocarbyl group, preferably methyl, ethyl, propyl or butyl group. Especially preferably the electron donor is selected from the group consisting of dicyclopentyldimethoxysilane, cyclohexylmethyldimethoxysilane, diphenyldimethoxysilane, di-tert-butyldimethoxysilane, and (diethylamino)triethoxysilane. Even more preferably, the external donor (ED) is dicyclopentanedimethoxysilane (DCPDMS, donor D).

The molar ratio between the organoaluminum compound and the external donor (ED) is preferably within the range of from 5 to 80, more preferably from 6 to 60. These ranges refer to the total external donor fed into the reaction zones. A skilled person will understand that the feed of the external donor can be split over the reaction zones.

The solid catalyst component, the organoaluminum compound and the external electron donor may be contacted with each other before their entry into the polymerization reactor or they may be introduced as separate components. It is preferred to contact the catalyst components before introducing them into the reactor. One suitable method of contacting the catalyst components is first contacting the organoaluminum compound and the external electron donor, for instance at a temperature within the range of from 0 to 50°C and thereafter contacting the mixture with the solid catalyst component at

a temperature within the range of from 0 to 50 °C. Another method includes contacting all three components simultaneously at a temperature within the range of from 0 to 50°C. The time needed for precontacting is typically from about 30 seconds to about one hour.

After the precontacting the catalyst components may be introduced to the polymerization reactor. It is, however, possible and preferred to introduce the precontacted catalyst components into a prepolymerization stage where the catalyst is contacted with propylene at a temperature of from about -10 to 50 °C to polymerize a small amount of propylene onto the catalyst. Typically the amount of propylene polymerized in the prepolymerization stage is from 50 to 1000 grams of polymer per one gram of catalyst. It is also possible to introduce the catalyst components separately into the prepolymerization stage as described above, without precontacting. From the prepolymerization stage the prepolymerized catalyst is passed to the polymerization reactor where the polymerization is conducted as described above.

The polymerization may be conducted according to any method known in the art as slurry or gas phase polymerization or combinations therefrom.

It is preferred that the polymerization process comprises at least one polymerization step where propylene is polymerized in slurry. Especially preferably the slurry polymerization step is conducted in a loop reactor.

When the polymerization is conducted in slurry, the temperature is typically from 50 to 100°C, preferably from 60 to 90°C. The pressure is typically from 1 to 100 bar, preferably from 10 to 80 bar and more preferably from 20 to 70 bar. The polymerization may be conducted in any reactor known in the art, for instance, loop reactor and continuous stirred tank reactor.

In slurry polymerization the polymer particles, including the active catalyst, are suspended in a fluid phase. The fluid phase may be a liquid phase or a so called supercritical phase where the temperature of the fluid is greater than the critical temperature thereof and the pressure of the fluid is greater than the critical pressure thereof. Preferably the fluid phase is a liquid phase.

The fluid phase comprises propylene monomer, hydrogen and eventual inert component(s). Preferably an inert component is not present or the amount of inert components is small, such as less than 40% by mole, based on the total amount of the fluid, preferably no more than 20% by mole or even no more than 10% by mole, based on the total amount of the fluid. It is especially preferred that the feed of inert components is at minimum, such as what is needed to introduce the catalyst into the reactor and what comes in as impurities together with propylene.

In slurry polymerization the average residence time of the polymer in the reactor is usually less than two hours, such as from 20 to 90 minutes, preferably from 30 to 70 minutes. The melt flow rate is controlled by adding hydrogen and typically the molar ratio of hydrogen to propylene in the fluid phase is from 0.05 to 40 mol/kmol, preferably from 0.1 to 20 mol/kmol. As the person skilled in the art knows, greater hydrogen to propylene ratio results in a greater melt flow rate of the polymer.

Preferably the first polypropylene homopolymer fraction (PPH1) of the trimodal polypropylene homopolymer (tPPH) is produced in a slurry, preferably loop polymerization step.

In a preferred embodiment, the second and the third polypropylene homopolymer fractions (PPH2) and (PPH3) are produced in two subsequent gas phase polymerization steps.

The temperature for polymerization steps in the gas phase is typically from 50 to 100°C, preferably from 60 to 90°C. The pressure is typically from 1 to 60 bar, preferably from 3 to 50 bar and more preferably from 5 to 30 bar. The polymerization may be conducted in any reactor known in the art, for instance, fluidised bed reactor, stirred bed reactor, settled bed reactor or fast fluidised bed reactor. It is preferred to conduct the process in a fluidised bed reactor.

In gas phase polymerization the average residence time of the polymer in the reactor is usually from one to five hours, preferably from 1.5 to 4 hours. The melt flow rate is controlled by adding hydrogen and the molar ratio of hydrogen to propylene may range from 0.05 to 400 mol/kmol, more preferably from 0.1 to 100 mol/kmol.

In each polymerization reactor the composition of the reactor contents can be analyzed according to the methods known in the art. Such methods usually include steps of taking gas or liquid samples from the reactor contents and passing the sample to an analyzer, such as one or more on-line gas chromatographs or infrared analysis equipment, respectively. Suitable equipment is available, among others, from Siemens, Emerson, AMA Instruments and ABB.

According to this invention, the first polypropylene homopolymer fraction (PPH1) is produced in the first step, i.e. in a first reactor, e.g. the loop reactor, whereas the second polypropylene homopolymer fraction (PPH2) and the third polypropylene homopolymer fraction (PPH3) is produced in subsequent steps, i.e. in the second and third reactor, e.g. a first and a second gas phase reactor. In case the polymerization process includes also a prepolymerization step, then the first polypropylene homopolymer fraction (PPH1) according to this invention is the polymer produced in the prepolymerization together with the polymer produced in the subsequent first step, in the first reactor, e.g. the loop reactor. The amount of polymer produced in the prepolymerization step is comparatively small compared to the quantities produced in the first reactor and therefore has no great influence on the properties of the polypropylene homopolymer fraction (PPH1) from the first reactor.

A preferred multistage process is a'loop - gas phase' - process, such as developed by Borealis A S, Denmark (known as BORSTAR® technology) described e.g. in patent literature, such as in EP-A-887379, WO-A-92/12182 WO-A-2004/000899, WO-A-2004/1 1 1095, WO-A-99/24478, WO-A-99/24479 or in WO-A-00/68315.

A further suitable slurry-gas phase process is the Spheripol® process of Basell.

### *(B) alpha nucleating agent*

The trimodal polypropylene homopolymer (tPPH) is post-reactor nucleated with an alpha-nucleating agent.

Preferred examples of the alpha-nucleating agents are disclosed in "Plastics Additives Handbook", Hans Zweifel, 6th Edition, p. 967 - 990.

Among all alpha-nucleating agents, bicyclo (2.2.1) heptane-2,3-dicarboxylic acid, di-sodium salt as for instance used in Hyperform familiy of Milliken (e.g. HPN-20E), hydroxy-bis[2,4,8,10-tetrakis(1,1-dimethylethyl)-6-hydroxy-12H-dibenzo-[d,g]-dioxa-phoshocin-6-oxidato] aluminium as used in the nucleating agents ADK NA-21, NA-21 E, NA-21 F, etc., metal salts of 2,2'-methylene bis(4,6-di-tert-butylphenyl)phosphat, like sodium-2,2'-methylene-bis(4,6-di-t-butyl-phenyl) phosphate (ADK NA-11), aluminium-hydroxy-bis[2,2'-methylene-bis(4,6-di-t-butyl-phenyl)-phosphate], 2,2'-methylene bis-(2,6-di-tert. butylphenyl) phosphate lithium salt (as used in ADK STAB NA-71), sorbitol-based nucleating agents, i.e. di(alkylbenzylidene)sorbitols like 1,3:2,4-25 dibenzylidene sorbitol, 1,3:2,4-di(4-methylbenzylidene) sorbitol, 1,3:2,4-di(4- ethylbenzylidene) sorbitol and 1,3:2,4-Bis(3,4-dimethylbenzylidene) sorbitol, as well as nonitol derivatives, like 1,2,3-trideoxy-4,6;5,7-bis-O-[(4-propylphenyl)methylene] nonitol, and benzene-trisamides like substituted 1,3,5-benzenetrisamides as N,N',N"-tris-tert-butyl-1,3,5- benzenetricarboxamide, N,N',N"-tris-cyclohexyl-1,3,5-benzene-tricarboxamide and N-[3,5-bis-(2,2-dimethyl-propionylamino)-phenyl]-2,2-dimethyl-propionamide, wherein metal salts of 2,2'-methylene bis(4,6-di-tert-butylphenyl)phosphat, like 2,2'- methylene bis-(2,6-di-tert. butylphenyl) phosphate lithium salt (e.g. NA-71), bicyclo (2.2.1) heptane-2,3-dicarboxylic acid, di-sodium salt (e.g. HPN-20E), hydroxy-bis[2,4,8,10-tetrakis(1,1-dimethylethyl)-6-hydroxy-12H-dibenzo-[d,g]-dioxa-phoshocin-6-oxidato] aluminium( e.g. NA-21) are particularly preferred.

Preferably, the polypropylene composition contains at least one alpha-nucleating agent selected from the group consisting of metal salt of 2,2'-methylene bis(4,6-di-tert-butylphenyl)phosphat, hydroxy-bis[2,4,8,10-tetrakis(1,1-dimethylethyl)-6-hydroxy-12H-dibenzo-[d,g]-dioxa-phoshocin-6-oxidato] aluminium (e.g. NA-21), and bicyclo (2.2.1) heptane-2,3-dicarboxylic acid, di-sodium salt (HPN-20E). Still more preferably the alpha-nucleating agent(s) is/are selected from the group consisting of 2,2'- methylene bis-(2,6-di-tert. butylphenyl) phosphate lithium salt (e.g. NA-71) andbicyclo (2.2.1) heptane-2,3-dicarboxylic acid, di-sodium salt (e.g. HPN-E20). Yet more preferably, the alpha-nucleating agent(s) present in the polymer composition is/are selected from the group consisting of 2,2'- methylene bis-(2,6-di-tert. butylphenyl) phosphate lithium salt (e.g. NA-71), hydroxy-bis[2,4,8,10-tetrakis(1,1-dimethylethyl)-6-hydroxy-12H-dibenzo-[d,g]-dioxa-phoshocin-6-oxidato] aluminium (like NA-21) and bicyclo (2.2.1) heptane-2,3-dicarboxylic acid, di-sodium salt (HPN-20E).

Thus, it is especially preferred that the alpha-nucleating agent(s) present in the polypropylene composition is/are selected from the group consisting of hydroxy-bis[2,4,8,10-tetrakis(1,1-dimethylethyl)-6-hydroxy-12H-dibenzo-[d,g]-dioxa-phoshocin-6-oxidato] aluminium (e.g. NA-21), 2,2'- methylene bis-(2,6-di-tert. butylphenyl) phosphate lithium salt (e.g. NA-71) and bicyclo (2.2.1) heptane-2,3-dicarboxylic acid, di-sodium salt (HPN-20E).

### Films

The present invention is not only directed to the inventive polypropylene composition, but also to films, preferably unoriented films made therefrom. Accordingly, in a further embodiment the present invention is directed to films, preferably unoriented films, like (unoriented) cast films or (unoriented) blown films, comprising at least 70.0 wt.-%, preferably comprising at least 80.0 wt.-%, more preferably comprising at least 90.0 wt.-%, still more preferably comprising at least 95.0 wt.-%, yet more preferably comprising at least 99.0 wt.-%, of the inventive polypropylene composition. Preferably, the film, preferably the unoriented film, more preferably the unoriented blown film consists of the inventive polypropylene composition.

One distinguishes between unoriented and oriented films (see for instance Polypropylene Handbook, Ed. Nello Pasquini, 2nd edition, Hanser 2005). Oriented films are typically monoaxially or biaxially oriented films, whereas unoriented films are cast or blown films. Accordingly, an unoriented film is not drawn intensively in machine and/or transverse direction as done by oriented films. Thus the unoriented film according to this invention is not a monoaxially or biaxially oriented film. Preferably the unoriented film according to the instant invention is a blown film or cast film, more preferably a blown film.

Preferably the unoriented film, more preferably the unoriented blown film has a thickness of 10 to 1000 μm, more preferably of 20 to 500 μm, like of 30 to 100 μm.

In a preferred embodiment, the film according to the present invention has a tensile modulus in machine direction, as determined in accordance with ISO 527-3 on a 50 μm blown film, of from 1700 to 2900 MPa, more preferably from 1800 to 2600 MPa, and most preferably from 1900 to 2400 MPa.

It is also preferred when the film according to the present invention has a haze value, as determined in accordance with ASTM D1003 on a 50 μm blown film, of from 0 to 25%, more preferably from 5 to 20%, and most preferably from 10 to 18%.

Due to the combination of high tensile modulus (high stiffness), low haze values and high crystallization temperature, such films a suitable candidates for skin layers in multilayer films substantially based on polypropylene polymers, i.e. based on at least 90 wt.-%, preferably at least 95 wt.-% of polypropylenes (related to the total weight of the multilayer films) and more preferably of polypropylene polymers only.

## Experimental part

## Measurement methods

### a) Melt Flow Rate

The melt flow rate was measured as the $MFR_2$ in accordance with ISO 1133 (230°C, 2.16 kg load) for polypropylene and is indicated in g/10 min. The MFR is an indication of the flowability, and hence the processability, of the polymer. The higher the melt flow rate, the lower the viscosity of the polymer.

Calculation of MFR of fractions PPH2 and PPH3

Calculation of melt flow rate $MFR_2$ (230 °C) of the polymer fraction PPH2 produced in the second polymerization reactor (1st GPR) is carried out using the formula below:

$$MFR\ (B) = 10^{\left[\frac{\log(MFR(C)) - w(A) x log(MFR(A))}{w(B)}\right]} \quad (I)$$

wherein

w(A) is the weight fraction in [wt.-%] and MFR(A) is melt flow rate $MFR_2$ (230 °C, 2.16 kg) in [g/10 min] of the first polymer fraction (A) (=PPH1) obtained in the first polymerization reactor (1$^{st}$ loop),
w(B) is the weight fraction in [wt.-%] and MFR(B) is melt flow rate $MFR_2$ (230 °C, 2.16 kg) in [g/10 min] of second polymer fraction (B) (=PPH2) obtained in the second polymerization reactor (1$^{st}$ GPR),
MFR(C) is melt flow rate $MFR_2$ (230 °C, 2.16 kg) in [g/10 min] of the polymer obtained as a result of the second polymerization step (the polymer, which comprises both fractions (A; PPH1) and (B, PPH2)).

Calculation of melt flow rate $MFR_2$ (230 °C, 2.16 kg) of the polymer fraction (PPH3) produced in the 3rd polymerization reactor (2$^{nd}$ GPR) is carried out using the formula below:

$$MFR\ (B) = 10^{\left[\frac{\log(MFR(C)) - w(A) x log(MFR(A))}{w(B)}\right]} \quad (I)$$

wherein

w(A) is the weight fraction in [wt.-%] and MFR(A) is melt flow rate $MFR_2$ (230 °C, 2.16 kg) in [g/10 min] of the polymer (PPH1 + PPH2) obtained after the 2nd polymerization reactor (1$^{st}$ GPR reactor),

w(B) is the weight fraction in [wt.-%] and MFR(B) is melt flow rate $MFR_2$ (230 °C, 2.16 kg) in [g/10 min] of the polymer fraction (B) (=PPH3) obtained in the third polymerization reactor (2$^{nd}$ GPR),

MFR(C) is melt flow rate $MFR_2$ (230 °C, 2.16 kg) in [g/10 min] of the polymer obtained as a result of the third polymerization step (the final polymer, which comprises the loop and the GPR fractions, i.e. PPH1 + PPH2 + PPH3).

### b) Xylene soluble fraction

The amount of the polymer soluble in xylene was determined at 25°C according to ISO 16152; 5th edition; 2005-07-01.

Calculation of XCS of fraction PPH2 and PPH3 ......

$$\frac{XS(R2) - w(PP1)x\,XS(PP1)}{w(PP2)} = XS(PP2)$$

wherein

**w(PP1)** is the weight fraction of the first polypropylene fraction (PPH1), i.e. the product of the first reactor (loop reactor),

**w(PP2)** is the weight fraction of the second polypropylene fraction (PPH2), i.e. of the polymer produced in the second reactor (1st GPR),

**XS(PP1)** is the xylene cold soluble (XCS) content [in wt.-%] as determined at 25°C according to ISO 16152; 5th edition; 2005-07-01 of the first polypropylene fraction (PPH1), i.e. of the product of the first reactor (loop reactor),

**XS(R2)** is the xylene cold soluble (XCS) content [in wt.-%] as determined at 25°C according to ISO 16152; 5th edition; 2005-07-01 of the product obtained in the second reactor (1st GPR), i.e. the mixture of the first polypropylene fraction (PPH1) and the second polypropylene fraction (PPH2),

**XS(PP2)** is the calculated xylene cold soluble (XCS) content [in wt.-%] of the second polypropylene fraction (PPH2).

**Calculation of xylene cold soluble (XCS)** content of the third polypropylene fraction (PPH3) :

$$\frac{XS(R3) - w(R2)x\,XS(R2)}{w(PP3)} = XS(PP3)$$

wherein

**w(R2)** is the weight fraction of the second reactor (1st GPR), i.e. the mixture of the first polypropylene fraction (PPH1) and the second polypropylene fraction (PPH2),
**w(PP3)** is the weight fraction of the third polypropylene fraction (PPH3), i.e. of the polymer produced in the third reactor (2nd GPR),
**XS(R2)** is the xylene cold soluble (XCS) content [in wt.-%] as determined at 25°C according to ISO 16152; 5th edition; 2005-07-01 of the product of the second reactor (after 1st GPR), i.e. of the mixture of the first polypropylene fraction (PPH1) and second polypropylene fraction (PPH2),
**XS(R3)** is the xylene cold soluble (XCS) content [in wt.-%] as determined at 25°C according to ISO 16152; 5th edition; 2005-07-01 of the product obtained in the third reactor (2nd GPR), i.e. the mixture of the first polypropylene fraction (PPH1), the second polypropylene fraction (PPH2), and the third polypropylene fraction (PPH3),
**XS(PP3)** is the calculated xylene cold soluble (XCS) content [in wt.-%] of the third polypropylene fraction (PPH3).

**c) Differential Scanning Calorimetry (DSC)**

measured with a TA Instrument Q200 differential scanning calorimetry (DSC) on 5 to 7 mg samples. DSC was run according to ISO 11357 / part 3 /method C2 in a heat / cool / heat cycle with a scan rate of 10 °C/min in the temperature range of -30 to +225 °C. Crystallization temperature ($T_c$) and crystallization enthalpy ($H_c$) were determined from the cooling step, while melting temperature ($T_m$) and melting enthalpy ($H_m$) were determined from the second heating step.

**d) Quantification of C2 content by NMR spectroscopy**

Quantitative nuclear-magnetic resonance (NMR) spectroscopy was used to quantify the comonomer content and comonomer distribution of the copolymers, specifically propene-co-ethylene copolymers. Quantitative $^{13}C\{^1H\}$ NMR spectra recorded in the solution-state using a Bruker Advance III 400 NMR spectrometer operating at 400.15 and 100.62

MHz for $^1H$ and $^{13}C$ respectively. All spectra were recorded using a $^{13}C$ optimised 10 mm selective excitation probe head at 125°C using nitrogen gas for all pneumatics. Approximately 200 mg of material was dissolved in 1,2-tetrachloroethane-$d_2$ (TCE-$d_2$) with chromium-(III)-acetylacetonate ($Cr(acac)_3$) resulting in a 65 mM solution of relaxation agent in solvent (Singh, G., Kothari, A., Gupta, V., Polymer Testing 28 5 (2009), 475). This setup was chosen primarily for the high resolution and quantitative spectra needed for accurate ethylene content determination. Standard single-pulse excitation was employed without NOE, using an optimised tip angle, 1 s recycle delay and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 6144 (6k) transients were acquired per spectra. Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present.

Characteristic signals corresponding to regio irregular propene insertion were observed (Resconi, L., Cavallo, L., Fait, A., Piemontesi, F., Chem. Rev. 2000, 100, 1253).].

Characteristic signals corresponding to the incorporation of ethylene were observed (Cheng, H. N., Macromolecules 17, 1984, 1950). The comonomer content was calculated as the mole fraction or percent of incorporated ethylene with respect to all monomer in the copolymer using the method of Wang et. al. (Wang, W-J., Zhu, S., Macromolecules 33, 2000, 1157) through integration of multiple signals spanning the whole spectral $^{13}C$ spectra. This analyze method was chosen for its robust nature and ability to account for the presence of regio-irregular propene insertion when needed. Integral regions were slightly adjusted to increase applicability across the whole range of encountered comonomer contents.

For systems where only isolated ethylene incorporation (PPEPP) was observed the method of Wang et. al. was modified to reduce the influence of non-zero integrals used to quantify higher order comonomer sequences. In such cases the term for the absolute ethylene content was determined based upon only.

$$E = 0.5(S\beta\beta + S\beta\gamma + S\beta\delta + 0.5(S\alpha\beta + S\alpha\gamma))$$

or

$E = 0.5(I_H + I_G + 0.5(I_C + I_D))$ using the same notation as Wang et. al. (Wang, W-J., Zhu, S., Macromolecules 33, 2000, 1157). The term used for absolute propylene content (P) was not modified and the mole fraction of ethylene calculated as

$$[E] = E / (E + P).$$

The comonomer content in weight percent was calculated from the mole fraction in the usual way i.e. [E wt%] = 100 * ( [E] * 28.06) / ( ([E] * 28.06) + ((1-[E]) * 42.08) ).

**e) Flexural modulus**

Flexural modulus was determined in a 3-point-bending according to ISO 178 on injection molded specimens of 80 x 10 x 4 mm, prepared at a melt temperature of 200 °C or 230°C in accordance with EN ISO 19069-2.

**f) Tensile Modulus**

Tensile moduli in machine and transverse direction were determined acc. to ISO 527-3 on films with a thickness of 50 μm, prepared as described below and measured at a cross head speed of 1 mm/min.

**g) Haze**

Haze as measures for the optical appearance was determined according to ASTM D 1003-92 (haze), on films with a thickness of 50 μm.

**Experiments**

The trimodal polypropylene homopolymer (tPPH) for the inventive polypropylene composition (IE1) was produced using a Ziegler-Natta catalyst (prepared as described in EP3562850), whose polymerization conditions are

presented in Table 1. It was produced in a Borstar pilot plant with a pre-polymerization reactor, one slurry loop reactor and two gas phase reactor. The solid catalyst was used along with triethyl-aluminium (TEAL) as cocatalyst and dicyclo pentyl dimethoxy silane (D-donor) as donor.

Comparative Example 1 (CE1), a unimodal polypropylene homopolymer was produced using the same catalyst as for IE1. It was produced in a Borstar pilot plant with a pre-polymerization reactor, one slurry loop reactor and one gas phase reactor. The solid catalyst was used along with triethyl-aluminium (TEAL) as cocatalyst and dicyclo pentyl dimethoxy silane (D-donor) as donor.

Comparative Example 2 (CE2), a bimodal polypropylene homopolymer was produced with a vinylcyclohexyl-modified Ziegler-Natta catalyst, prepared according to WO 2017/148970 A1. It was produced in a Borstar pilot plant with a pre-polymerization reactor, one slurry loop reactor and one gas phase reactor. The solid catalyst was used along with triethyl-aluminium (TEAL) as cocatalyst and dicyclo pentyl dimethoxy silane (D-donor) as donor.

Table 1: Polymerization conditions for the polymers for IE1, CE1 and CE2

| | | **IE1** | **CE1** | **CE2** |
|---|---|---|---|---|
| | **Prepoly** | | | |
| TEAL/Donor | mol/mol | 10 | 10 | 10 |
| TEAL/Ti | mol/mol | 200 | 200 | 200 |
| Temperature | °C | 15.4 | 20 | 30 |
| Pressure | kPa | 5058 | 5345 | 2500 |
| Residence time | min | 24 | 24 | 20 |
| | **Loop (R1)** | | | |
| Temperature | °C | 75 | 75 | 80 |
| Pressure | kPa | 5059 | 5329 | 5500 |
| Split | wt.-% | 40.8 | 49.0 | 60.0 |
| Feed H2/C3 | mol/kmol | 1.2 | 0.6 | 2.10 |
| Feed C2/C3 | mol/kmol | - | - | 0.80 |
| $MFR_2$ | g/10min | 9.07 | 2.0 | 3.8 |
| C2(Loop) | wt.-% | 0 | 0 | 0.65 |
| XCS | wt.-% | 2.9 | 3.0 | 3,4 |
| | **1st GPR (R2)** | | | |
| Temperature | °C | 85 | 85 | 80 |
| Pressure | kPa | 2400 | 1898 | 2800 |
| Split | wt.-% | 51.2 | 51.0 | 40 |
| Feed H2/C3 | mol/kmol | 5.2 | 4.9 | 15.4 |
| Feed C2/C3 | mol/kmol | - | - | 1.5 |
| $MFR_2$* of polymer produced in R2 | g/10min | 4.5 | 3.3 | 3.8 |
| $MFR_2$ (after GPR1)** | g/10min | 6.0 | 2.6 | 3.8 |
| C2 (GPR1) | wt.-% | 0 | 0 | 0.65 |
| XCS (after GPR1)** | wt.-% | 2.4 | 1.5 | 2.2 |
| XCS of polymer produced in R2 | wt.-% | 2.1 | 0.1 | 1.4 |
| **$2^{nd}$ GPR (R3)** | | | | |
| | | | Not used | Not used |
| Temperature | °C | 84.2 | | |
| Pressure | kPa | 2400 | | |
| Split | wt.-% | 8.0 | | |

(continued)

| 2nd GPR (R3) | | | | |
|---|---|---|---|---|
| Feed H2/C3 | mol/kmol | 0.5 | | |
| Feed C2/C3 | mol/kmol | - | | |
| $MFR_2$* of polymer produced in R3 | g/10min | 0.5 | | |
| $MFR_2$ (after GPR2)** | g/10min | 4.9 | | |
| C2 (GPR2) | wt.-% | 0 | | |
| XCS (after GPR2)** | wt.-% | 2.6 | | |
| XCS of polymer produced in R3 | wt.-% | 2.5 | | |
| *calculated<br>**measured | | | | |

Base polymers produced according to Table 1 were then mixed with different additives in an intensive mixer and then compounded on a ZSK18 twin screw extruder, with melt temperature of 210°C, production rate of 7 kg/h.

Recipe and some of the properties measured on pellets are presented in Table 2, where AO1 is Irganox 1010 (CAS No. 6683-19-8, supplied by BASF AG, DE), AO2 is Irgafos 168 (CAS-no. 31570-04-4, supplied by BASF AG, DE) and AS is Calcium stearate (Ceasit FI supplied by Baerlocher, DE).

The base polymers of IE1 and CE1 where furthermore nucleated by addition of 1000 ppm of ADK STAB NA-71, an alpha nucleating agent (NA) provided by Adeka being a mixture comprising 2,2'-methylenebis(2,4-di-tert-butylphenyl) phosphate lithium salt (CAS-no. 85209-93-4).

Table 2:

| | | IE1 | CE1 | CE2 |
|---|---|---|---|---|
| Base polymer | wt.-% | 99.77 | 99.77 | 99.87 |
| AO1 | wt.-% | 0.03 | 0.03 | 0.03 |
| AO2 | wt.-% | 0.06 | 0.06 | 0.06 |
| AS | wt.-% | 0.04 | 0.04 | 0.04 |
| NA | wt.-% | 0.1 | 0.1 | - |
| | | **Pellet** | | |
| $MFR_2$ | g/10min | 4.9 | 2.6 | 3.8 |
| XCS | wt.-% | 2.6 | 1.5 | 2.2 |
| C2 (total) | wt.-% | 0 | 0 | 0.65 |
| Tm | °C | 167 | 167 | 161 |
| Tc | °C | 132 | 129 | 125 |
| Hm | J/g | 114 | 113 | 106 |
| FM | MPa | 2222 | 1930 | 1851 |

Preparation of films

The polymer compositions were used to prepare blow films of 50 μm thickness.

Collin 30 BF lab scale line was used according to standard procedures with a blow up ratio (BUR) of 1:2.5. The melt temperature was 210 °C, frostline distance 120 mm, uptake speed 7 m/min.

Properties of the films are summarized in Table 3 below.

Table 3: Properties of the films

| | Unit | IE1 | CE1 | CE2 |
|---|---|---|---|---|
| Tensile modulus (MD) | MPa | 2086 | 1677 | 1887 |
| Haze | % | 16.4 | 30.1 | 20.5 |

The above data show that the polypropylene compositions of the present invention has the highest crystallization temperature, melting temperature and flexural modulus. Such a combination leads to films with increased stiffness and reduced hazed compared to the unimodal and bimodal compositions.

## Claims

1. A polypropylene composition comprising:

(A) 99.0 to 99.9999 wt.-%, based on the total weight of the composition, of a trimodal polypropylene homopolymer (tPPH), the trimodal polypropylene homopolymer (tPPH) comprising (A-1) 20 to 60 wt.-%, based on the total weight of the tPPH, of a first polypropylene homopolymer fraction (PPH1) having

• a melt flow rate $MFR_2$, determined according to ISO 1133 at 230°C and a load of 2.16 kg, in the range of 1.0 to 20 g/10 min,

(A-2) 30 to 60 wt.-%, based on the total weight of the tPPH, of a second polypropylene homopolymer fraction (PPH2) having

• a melt flow rate $MFR_2$, determined according to ISO 1133 at 230°C and a load of 2.16 kg, in the range of 1.0 to 20 g/10 min,

(A-3) 1 to 15 wt.-%, based on the total weight of the tPPH, of a third polypropylene homopolymer fraction (PPH3) having

• a melt flow rate $MFR_2$, determined according to ISO 1133 at 230°C and a load of 2.16 kg, in the range of 0.1 to 5.0 g/10 min,

whereby the $MFR_2$ of the first, the second and the third polypropylene homopolymer fraction are different from each other and whereby $MFR_2$ of (PPH1) > $MFR_2$ of (PPH2) > $MFR_2$ (PPH3);
(B) 0.0001 to 1.0 wt.-%, based on the total weight of the polypropylene composition, of an alpha nucleating agent,

whereby the polypropylene composition has
a melt flow rate $MFR_2$, determined according to ISO 1133 at 230°C and a load of 2.16 kg, in the range of 0.5 to 15 g/10 min,
a crystallization temperature, determined with DSC according to ISO 11357, in the range of 125 to 140°C and
a flexural modulus, determine according to ISO 178 on injection molded specimens of 80 x 10 x 4 $mm^3$, prepared at 230°C in accordance with EN ISO 19069-2 in the range of 1950 to 2800 MPa.

2. The polypropylene composition according to claim 1, wherein the polypropylene composition has a flexural modulus, determined in a 3-point-bending according to ISO 178 on injection molded specimens of 80 x 10 x 4 $mm^3$, prepared at a melt temperature of 230°C in accordance with EN ISO 19069-2, of the polypropylene in the range of 2000 to 2800 MPa, preferably 2100 to 2500 MPa and/or
a melting temperature (Tm), determined by differential scanning calorimetry (DSC), in the range of 162 to 175°C, preferably 163 to 172°C, more preferably 165 to 170°C.

3. The polypropylene composition according to claim 1 or 2, wherein the composition has a melt flow rate $MFR_2$ (230°C, 2.16kg, ISO 1133) in the range from 1.0 to 10 g/10 min, preferably from 2.0 to 8.0 g/10 min and/or a crystallization temperature Tc, determined by differential scanning calorimetry (DSC) in the range of 130 to 140°C, preferably 130 to 135°C.

**4.** The polypropylene composition according to any of the preceding claims, wherein the amount of the trimodal polypropylene homopolymer (tPPH) is in the range of 99.3 to 99.99 wt.-%, preferably 99.5 to 99.95 wt.-% and the amount of the alpha nucleating agent is in the range of 0.01 to 0.7 wt.-%, preferably 0.05 to 0.5wt.-%, both based on the total weight of the polypropylene composition.

**5.** The polypropylene composition according to any of the preceding claims, wherein the trimodal polypropylene homopolymer (tPPH) consists of

(A-1) 30 to 55 wt.-0%, based on the total weight of the tPPH, of the first polypropylene homopolymer fraction (PPH1)
(A-2) 40 to 60 wt.-%, based on the total weight of the tPPH, of the second polypropylene homopolymer fraction (PPH2) and
(A-3) 3 to 12 wt.-%, based on the total weight of the tPPH, of the third polypropylene homopolymer fraction (PPH3),
the sum of the amounts of PPH1, PPH2 and PPH3 add up to 100 wt.-%, preferably
the trimodal polypropylene homopolymer (tPPH) consists of
(A-1) 40 to 52 wt.-%, based on the total weight of the tPPH, of the first polypropylene homopolymer fraction (PPH1)
(A-2) 45 to 58 wt.-%, based on the total weight of the tPPH, of the second polypropylene homopolymer fraction (PPH2) and
(A-3) 5 to 10 wt.-%, based on the total weight of the tPPH, of the third polypropylene homopolymer fraction (PPH3),
the sum of the amounts of PPH1, PPH2 and PPH3 add up to 100 wt.-%.

**6.** The polypropylene composition according to any of the preceding claims, wherein

the first polypropylene homopolymer fraction (PPH1) has a melt flow rate $MFR_2$ (230°C, 2.16 kg, ISO 1133-1) in the range of 2.0 to 15 g/10 min, preferably in the range of 5.0 to 12.0 g/10 min,
the second polypropylene homopolymer fraction (PPH2) has a melt flow rate $MFR_2$ (230°C, 2.16 kg, ISO 1133-1) in the range of 1.5 to 12 g/10 min, preferably in the range of 2.0 to 8.0 g/10 min and
the third polypropylene homopolymer fraction (PPH3) has a melt flow rate $MFR_2$ (230°C, 2.16 kg, ISO 1133-1) in the range of 0.2 to 3.0 g/10 min, preferably in the range of 0.3 to 1.5 g/10 min, whereby the $MFR_2$ of the first, the second and the third polypropylene homopolymer fraction are different from each other and whereby $MFR_2$ of (PPH1) > $MFR_2$ of (PPH2) > $MFR_2$ (PPH3).

**7.** The polypropylene composition according to any of the preceding claims, wherein the final $MFR_2$ (230°C, 2.16kg, ISO 1133-1) of the trimodal polypropylene homopolymer (tPPH) is in the range of 1.0 to 12 g/10 min, preferably in the range of 2.0 to 8.0 g/10 min and/or wherein the trimodal polypropylene homopolymer (tPPH) has a xylene cold soluble (XCS) content, determined according to ISO 16152; at 25 °C of less than 3.5 wt.-%, preferably 3.0 wt.-% or lower and more preferably 2.9 wt.-% or lower, respectively in the range of 0.5 to less than 3.5 wt.-%, more preferably 1.0 to 3.0 wt.-% and even more preferred from 1.5 to 2.9 wt.-%.

**8.** The polypropylene composition according to any of the preceding claims, wherein the trimodal polypropylene homopolymer (tPPH) of the polypropylene composition is prepared by a multistage polymerization process in the presence of a Ziegler-Natta catalyst (ZN-C) comprising

a) compounds (TC) of a transition metal of Group 4 to 6 of the IUPAC Periodic Table of Elements, a Group 2 metal compound (MC) and an internal donor (ID), wherein said internal donor (ID) is a non-phthalic compound,
b) a co-catalyst (Co), and
c) optionally an external donor (ED).

**9.** The polypropylene composition according to claim 8, wherein the internal donor (ID) is selected from the group consisting of malonates, maleates, succinates, glutarates, benzoates and derivatives, each optionally substituted, and/or mixtures thereof, preferably from optionally substituted citraconates.

**10.** The polypropylene composition according to any of the preceding claims, wherein the trimodal polypropylene homopolymer (tPPH) is post-reactor nucleated with at least one alpha-nucleating agent.

**11.** The polypropylene composition according to any of the preceding claims, wherein the at least one alpha-nucleating agent is selected from bicyclo (2.2.1) heptane-2,3-dicarboxylic acid, di-sodium salt, hydroxy-bis[2,4,8,10-tetrakis(1,1-dimethylethyl)-6-hydroxy-12H-dibenzo-[d,g]-dioxa-phoshocin-6-oxidato] aluminium, metal salts of 2,2'-methylene bis(4,6-di-tert-butylphenyl)phosphat, preferably sodium-2,2'-methylene-bis(4,6-di-t-butylphenyl) phosphate, aluminium-hydroxy-bis[2,2'-methylene-bis(4,6-di-t-butyl-phenyl)-phosphate], 2,2'- methylene bis-(2,6-di-tert. butylphenyl) phosphate lithium salt, sorbitol-based nucleating agents, preferably di(alkylbenzylidene)sorbitols like 1,3:2,4-25 dibenzylidene sorbitol, 1,3:2,4-di(4-methylbenzylidene) sorbitol, 1,3:2,4-di(4- ethylbenzylidene) sorbitol and 1,3:2,4-Bis(3,4-dimethylbenzylidene) sorbitol, as well as nonitol derivatives, preferably 1,2,3-trideoxy-4,6;5,7-bis-O-[(4-propylphenyl)methylene] nonitol, and benzene-trisamides preferably substituted 1,3,5-benzenetrisamides as N,N',N''-tris-tert-butyl-1,3,5- benzenetricarboxamide, N, N', N''-tris-cyclohexyl-1,3,5-benzene-tricarboxamide and N-[3,5-bis-(2,2-dimethyl-propionylamino)-phenyl]-2,2-dimethyl-propionamide, wherein metal salts of 2,2'-methylene bis(4,6-di-tert-butylphenyl)phosphat, like 2,2'- methylene bis-(2,6-di-tert. butylphenyl) phosphate lithium salt (e.g. NA-71), bicyclo (2.2.1) heptane-2,3-dicarboxylic acid, di-sodium salt, hydroxy-bis[2,4,8,10-tetrakis(1,1-dimethylethyl)-6-hydroxy-12H-dibenzo-[d,g]-dioxa-phoshocin-6-oxidato] aluminium are particularly preferred.

**12.** The polypropylene composition according to claim 11, wherein the at least one alpha nucleating agent is/are selected from the group consisting of 2,2'- methylene bis-(2,6-di-tert. butylphenyl) phosphate lithium salt, hydroxy-bis [2,4,8,10-tetrakis(1,1-dimethylethyl)-6-hydroxy-12H-dibenzo-[d,g]-dioxa-phoshocin-6-oxidato] aluminium and bicyclo (2.2.1) heptane-2,3-dicarboxylic acid, di-sodium salt.

**13.** Use of the polypropylene composition according to any of the preceding claims for the production of films, especially blown films.

**14.** A film, preferably a blown film, comprising at least 70.0 wt.-%, preferably comprising at least 80.0 wt.-%, more preferably comprising at least 90.0 wt.-%, still more preferably comprising at least 95.0 wt.-%, yet more preferably comprising at least 99.0 wt.-%, of the polypropylene composition according to any of the preceding claims 1 to 9.

**15.** Blown film according to claim 14, the blown film having a tensile modulus in machine direction, as determined in accordance with ISO 527-3 on a 50 μm blown film, of from 1700 to 2900 MPa, more preferably from 1800 to 2600 MPa, and most preferably from 1900 to 2400 MPa and a haze value, as determined in accordance with ASTM D1003 on a 50 μm blown film, of from 0 to 25%, more preferably from 5 to 20%, and most preferably from 10 to 18%.

## Patentansprüche

**1.** Polypropylen-Zusammensetzung, umfassend:

(A) 99,0 bis 99,9999 Gew.-%, bezogen auf das Gesamtgewicht der Zusammensetzung, eines trimodalen Polypropylen-Homopolymers (tPPH), wobei das trimodale Polypropylen-Homopolymer (tPPH) umfasst
(A-1) 20 bis 60 Gew.-%, bezogen auf das Gesamtgewicht des tPPH, einer ersten Polypropylen-Homopolymerfraktion (PPH1) mit

- einer Schmelzflussrate $MFR_2$, bestimmt gemäß ISO 1133 bei 230 °C und einer Belastung von 2,16 kg, im Bereich von 1,0 bis 20 g/10 min,

(A-2) 30 bis 60 Gew.-%, bezogen auf das Gesamtgewicht des tPPH, einer zweiten Polypropylen-Homopolymerfraktion (PPH2) mit

- einer Schmelzflussrate $MFR_2$, bestimmt gemäß ISO 1133 bei 230 °C und einer Belastung von 2,16 kg, im Bereich von 1,0 bis 20 g/10 min,

(A-3) 1 bis 15 Gew.-%, bezogen auf das Gesamtgewicht des tPPH, einer dritten Polypropylen-Homopolymerfraktion (PPH3) mit

- einer Schmelzflussrate $MFR_2$, bestimmt gemäß ISO 1133 bei 230 °C und einer Belastung von 2,16 kg, im Bereich von 0,1 bis 5,0 g/10 min,

wobei die $MFR_2$ der ersten, der zweiten und der dritten Polypropylen-Homopolymerfraktion voneinander ver-

schieden sind und wobei $MFR_2$ von (PPH1) > $MFR_2$ von (PPH2) > $MFR_2$ (PPH3) ist;
(B) 0,0001 bis 1,0 Gew.-%, bezogen auf das Gesamtgewicht der Polypropylen-Zusammensetzung, eines Alpha-Nukleierungsmittels,
wobei die Polypropylen-Zusammensetzung
eine Schmelzflussrate $MFR_2$, bestimmt gemäß ISO 1133 bei 230 °C und einer Belastung von 2,16 kg, im Bereich von 0,5 bis 15 g/10 min,
eine Kristallisationstemperatur, bestimmt mit DSC gemäß ISO 11357, im Bereich von 125 bis 140 °C und einen Biegemodul, bestimmt gemäß ISO 178 an spritzgegossenen Proben von 80 x 10 x 4 $mm^3$, hergestellt bei 230 °C gemäß EN ISO 19069-2 im Bereich von 1950 bis 2800 MPa hat.

**2.** Die Polypropylen-Zusammensetzung nach Anspruch 1, wobei die Polypropylen-Zusammensetzung ein Biegemodul, das in einer 3-Punkt-Biegung gemäß ISO 178 an spritzgegossenen Proben von 80 x 10 x 4 $mm^3$, hergestellt bei einer Schmelztemperatur von 230 °C gemäß EN ISO 19069-2, bestimmt wird, im Bereich von 2000 bis 2800 MPa hat, bevorzugt 2100 bis 2500 MPa, und/oder
eine durch Differential-Scanning-Kalorimetrie (DSC) bestimmte Schmelztemperatur (Tm) im Bereich von 162 bis 175 °C, bevorzugt 163 bis 172 °C, mehr bevorzugt 165 bis 170 °C.

**3.** Die Polypropylen-Zusammensetzung nach Anspruch 1 oder 2, wobei die Zusammensetzung eine Schmelzflussrate $MFR_2$ (230 °C, 2,16 kg, ISO 1133) im Bereich von 1,0 bis 10 g/10 min hat, bevorzugt von 2,0 bis 8,0 g/10 min, und/oder eine Kristallisationstemperatur Tc, bestimmt durch Differential-Scanning-Kalorimetrie (DSC), im Bereich von 130 bis 140 °C, bevorzugt 130 bis 135 °C.

**4.** Die Polypropylen-Zusammensetzung nach einem der vorangehenden Ansprüche, wobei die Menge des trimodalen Polypropylen-Homopolymers (tPPH) im Bereich von 99,3 bis 99,99 Gew.-% ist, bevorzugt 99,5 bis 99,95 Gew.-%, und die Menge des Alpha-Nukleierungsmittels im Bereich von 0,01 bis 0,7 Gew.-% ist, bevorzugt 0,05 bis 0,5 Gew.-%, jeweils bezogen auf das Gesamtgewicht der Polypropylen-Zusammensetzung.

**5.** Die Polypropylen-Zusammensetzung nach einem der vorangehenden Ansprüche, wobei das trimodale Polypropylen-Homopolymer (tPPH) besteht aus

(A-1) 30 bis 55 Gew.-%, bezogen auf das Gesamtgewicht des tPPH, der ersten Polypropylen-Homopolymerfraktion (PPH1)
(A-2) 40 bis 60 Gew.-%, bezogen auf das Gesamtgewicht des tPPH, der zweiten Polypropylen-Homopolymerfraktion (PPH2) und
(A-3) 3 bis 12 Gew.-%, bezogen auf das Gesamtgewicht des tPPH, der dritten Polypropylen-Homopolymerfraktion (PPH3),
wobei die Summe der Mengen an PPH1, PPH2 und PPH3 100 Gew.-% ergibt, bevorzugt
besteht das trimodale Polypropylen-Homopolymer (tPPH) aus
(A-1) 40 bis 52 Gew.-%, bezogen auf das Gesamtgewicht des tPPH, der ersten Polypropylen-Homopolymerfraktion (PPH1)
(A-2) 45 bis 58 Gew.-%, bezogen auf das Gesamtgewicht des tPPH, der zweiten Polypropylen-Homopolymerfraktion (PPH2) und
(A-3) 5 bis 10 Gew.-%, bezogen auf das Gesamtgewicht des tPPH, der dritten Polypropylen-Homopolymerfraktion (PPH3),
wobei die Summe der Mengen von PPH1, PPH2 und PPH3 100 Gew.-% ergibt.

**6.** Die Polypropylen-Zusammensetzung nach einem der vorangehenden Ansprüche, wobei

die erste Polypropylen-Homopolymerfraktion (PPH1) eine Schmelzflussrate $MFR_2$ (230 °C, 2,16 kg, ISO 1133-1) im Bereich von 2,0 bis 15 g/10 min hat, bevorzugt im Bereich von 5,0 bis 12,0 g/10 min,
die zweite Polypropylen-Homopolymerfraktion (PPH2) eine Schmelzflussrate $MFR_2$ (230 °C, 2,16 kg, ISO 1133-1) im Bereich von 1,5 bis 12 g/10 min hat, bevorzugt im Bereich von 2,0 bis 8,0 g/10 min, und
die dritte Polypropylen-Homopolymerfraktion (PPH3) eine Schmelzflussrate $MFR_2$ (230 °C, 2,16 kg, ISO 1133-1) im Bereich von 0,2 bis 3,0 g/10 min hat, bevorzugt im Bereich von 0,3 bis 1,5 g/10 min, wobei sich die $MFR_2$ der ersten, der zweiten und der dritten Polypropylen-Homopolymerfraktion voneinander unterscheiden und wobei $MFR_2$ von (PPH1) > $MFR_2$ von (PPH2) > $MFR_2$ (PPH3).

**7.** Die Polypropylen-Zusammensetzung nach einem der vorangehenden Ansprüche, wobei die endgültige $MFR_2$ (230

°C, 2,16 kg, ISO 1133-1) des trimodalen Polypropylen-Homopolymers (tPPH) im Bereich von 1,0 bis 12 g/10 min ist, bevorzugt im Bereich von 2,0 bis 8,0 g/10 min, und/oder wobei das trimodale Polypropylen-Homopolymer (tPPH) einen Gehalt an kaltlöslichem Xylol (XCS) gemäß ISO 16152 bei 25 °C bestimmt von weniger als 3,5 Gew.-% hat, bevorzugt 3,0 Gew.-% oder weniger und mehr bevorzugt 2,9 Gew.-% oder weniger, respektive im Bereich von 0,5 bis weniger als 3,5 Gew.-%, mehr bevorzugt 1,0 bis 3,0 Gew.-% und noch mehr bevorzugt 1,5 bis 2,9 Gew.-%.

**8.** Die Polypropylen-Zusammensetzung nach einem der vorangehenden Ansprüche, wobei das trimodale Polypropylen-Homopolymer (tPPH) der Polypropylen-Zusammensetzung durch ein mehrstufiges Polymerisationsverfahren in Gegenwart eines Ziegler-Natta-Katalysators (ZN-C) hergestellt wird, umfassend

a) Verbindungen (TC) eines Übergangsmetalls der Gruppe 4 bis 6 des IUPAC-Periodensystems der Elemente, einer Verbindung (MC) eines Metalls der Gruppe 2 und eines internen Donors (ID), wobei der interne Donor (ID) eine nicht-phthalische Verbindung ist,
b) einen Cokatalysator (Co) und
c) optional einen externen Donor (ED).

**9.** Die Polypropylen-Zusammensetzung nach Anspruch 8, wobei der interne Donor (ID) ausgewählt ist aus der Gruppe bestehend aus Malonaten, Maleaten, Succinaten, Glutaraten, Benzoaten und Derivaten, die jeweils optional substituiert sind, und/oder Mischungen davon, bevorzugt aus optional substituierten Citraconaten.

**10.** Die Polypropylen-Zusammensetzung nach einem der vorangehenden Ansprüche, wobei das trimodale Polypropylen-Homopolymer (tPPH) nach dem Reaktor mit mindestens einem Alpha-Nukleierungsmittel nukleiert wird.

**11.** Die Polypropylen-Zusammensetzung nach einem der vorangehenden Ansprüche, wobei das mindestens eine Alpha-Nukleierungsmittel ausgewählt ist aus Bicyclo(2.2.1)heptan-2,3-dicarbonsäure, Dinatriumsalz, Hydroxy-bis [2,4,8,10-tetrakis(1,1-dimethylethyl)-6-hydroxy-12H-dibenzo-[d,g]-dioxa-phoshocin-6-oxidato]aluminium, Metallsalzen von 2,2'-Methylenbis(4,6-di-tert-butylphenyl)phosphat, bevorzugt Natrium-2,2'-methylenbis(4,6-di-t-butylphenyl)phosphat, Aluminium-hydroxy-bis[2,2'-methylenbis(4,6-di-t-butylphenyl)phosphat], 2,2'-Methylenbis-(2,6-di-tert-butylphenyl)phosphat-Lithiumsalz, Sorbitol-basierten Nukleierungsmitteln, bevorzugt Di(alkylbenzyliden)sorbitolen wie 1,3:2,4-25-Dibenzylidensorbitol, 1,3:2,4-Di(4-methylbenzyliden)sorbitol, 1,3:2,4-Di(4-ethylbenzyliden) sorbitol und 1,3:2,4-Bis(3,4-dimethylbenzyliden)sorbitol, sowie Nonitolderivaten, bevorzugt 1,2,3-Trideoxy-4,6;5,7-Bis-O-[(4-propylphenyl)methylen]nonitol und Benzoltrisamiden, bevorzugt substituierte 1,3,5-Benzoltrisamid wie N,N',N"-Tris-tert-butyl-1,3,5-benzentricarboxamid, N,N',N"-Tris-cyclohexyl-1,3,5-benzentricarboxamid und N-[3,5-Bis-(2,2-dimethylpropionylamino)-phenyl]-2,2-dimethylpropionamid, wobei Metallsalze von 2,2'-Methylen-bis(4,6-di-tert-butylphenyl)phosphat, wie 2,2'-Methylenbis-(2,6-di-tert-butylphenyl)phosphat-Lithiumsalz (z. B. NA-71), Bicyclo(2.2.1)heptan-2,3-dicarbonsäure, Dinatriumsalz, Hydroxy-bis[2,4,8,10-tetrakis(1,1-dimethylethyl)-6-hydroxy-12H-dibenzo-[d,g]-dioxa-phoshocin-6-oxidato]aluminium besonders bevorzugt sind.

**12.** Die Polypropylen-Zusammensetzung nach Anspruch 11, wobei das mindestens eine Alpha-Nukleierungsmittel aus der Gruppe ausgewählt ist, bestehend aus 2,2'-Methylenbis-(2,6-di-tert.butylphenyl)phosphat-Lithiumsalz, Hydroxy-bis[2,4,8,10-tetrakis(1,1-dimethylethyl)-6-hydroxy-12H-dibenzo-[d,g]-dioxa-phoshocin-6-oxidato]aluminium und Bicyclo(2.2.1)heptan-2,3-dicarbonsäure, Dinatriumsalz.

**13.** Verwendung der Polypropylen-Zusammensetzung gemäß einem der vorangehenden Ansprüche zur Herstellung von Folien, insbesondere Blasfolien.

**14.** Folie, bevorzugt Blasfolie, umfassend mindestens 70,0 Gew.-%, bevorzugt mindestens 80,0 Gew.-%, mehr bevorzugt mindestens 90,0 Gew.-%, noch mehr bevorzugt mindestens 95,0 Gew.-%, noch weiter bevorzugt mindestens 99,0 Gew.-% der Polypropylen-Zusammensetzung gemäß einem der vorangehenden Ansprüche 1 bis 9.

**15.** Blasfolie gemäß Anspruch 14, wobei die Blasfolie einen Zugmodul in Maschinenrichtung, bestimmt gemäß ISO 527-3 an einer 50 μm Blasfolie, von 1700 bis 2900 MPa hat, bevorzugt von 1800 bis 2600 MPa, und am meisten bevorzugt von 1900 bis 2400 MPa, und einen Trübungswert, bestimmt gemäß ASTM D1003 an einer 50 μm dicken Blasfolie, von 0 bis 25 %, bevorzugt von 5 bis 20 % und am bevorzugtesten von 10 bis 18 %.

## Revendications

1. Composition de polypropylène comprenant :

(A) 99,0 à 99,9999 % en poids, sur la base du poids total de la composition, d'un homopolymère de polypropylène trimodal (tPPH), l'homopolymère de polypropylène trimodal (tPPH) comprenant (A-1) 20 à 60 % en poids, sur la base du poids total du tPPH, d'une première fraction homopolymère de polypropylène (PPH1) ayant

• un indice de fluidité à chaud $MFR_2$, déterminé selon la norme ISO 1133 à 230 °C et une charge de 2,16 kg, dans la plage de 1,0 à 20 g/10 min,

(A-2) 30 à 60 % en poids, sur la base du poids total du tPPH, d'une deuxième fraction homopolymère de polypropylène (PPH2) ayant

• un indice de fluidité à chaud $MFR_2$, déterminé selon la norme ISO 1133 à 230 °C et une charge de 2,16 kg, dans la plage de 1,0 à 20 g/10 min,

(A-3) 1 à 15 % en poids, sur la base du poids total du tPPH, d'une troisième fraction homopolymère de polypropylène (PPH3) ayant

• un indice de fluidité à chaud $MFR_2$, déterminé selon la norme ISO 1133 à 230 °C et une charge de 2,16 kg, dans la plage de 0,1 à 5,0 g/10 min,

où les $MFR_2$ de la première, de la deuxième et de la troisième fraction homopolymère de polypropylène sont différents les uns des autres et où $MFR_2$ de (PPH1) > $MFR_2$ de ($PPH_2$) > $MFR_2$ (PPH3) ;
(B) 0,0001 à 1,0 % en poids, sur la base du poids total de la composition de polypropylène, d'un agent d'alpha-nucléation,
où la composition de polypropylène possède
un indice de fluidité à chaud $MFR_2$, déterminé selon la norme ISO 1133 à 230 °C et une charge de 2,16 kg, dans la plage de 0,5 à 15 g/10 min,
une température de cristallisation, déterminée par DSC selon la norme ISO 11357, dans la plage de 125 à 140 °C et un module de flexion, déterminé selon la norme ISO 178 sur des éprouvettes moulées par injection de 80 x 10 x 4 $mm^3$, préparées à 230 °C conformément à la norme EN ISO 19069-2, dans la plage de 1950 à 2800 MPa.

2. Composition de polypropylène selon la revendication 1, dans laquelle la composition de polypropylène possède un module de flexion, déterminé en flexion 3 points selon la norme ISO 178 sur des éprouvettes moulées par injection de 80 x 10 x 4 $mm^3$, préparées à une température de fusion de 230 °C conformément à la norme EN ISO 19069-2, du polypropylène dans la plage de 2000 à 2800 MPa, de préférence de 2100 à 2500 MPa et/ou
une température de fusion (Tm), déterminée par calorimétrie différentielle à balayage (DSC), dans la plage de 162 à 175 °C, de préférence de 163 à 172 °C, plus préférentiellement de 165 à 170 °C.

3. Composition de polypropylène selon la revendication 1 ou 2, dans laquelle la composition possède un indice de fluidité à chaud $MFR_2$ (230 °C, 2,16 kg, ISO 1133) dans la plage de 1,0 à 10 g/10 min, de préférence de 2,0 à 8,0 g/10 min et/ou une température de cristallisation Tc, déterminée par calorimétrie différentielle à balayage (DSC), dans la plage de 130 à 140 °C, de préférence de 130 à 135 °C.

4. Composition de polypropylène selon l'une quelconque des revendications précédentes, dans laquelle la quantité de l'homopolymère de polypropylène trimodal (tPPH) est dans la plage de 99,3 à 99,99 % en poids, de préférence de 99,5 à 99,95 % en poids et la quantité de l'agent d'alpha-nucléation est dans la plage de 0,01 à 0,7 % en poids, de préférence de 0,05 à 0,5 % en poids, toutes les deux sur la base du poids total de la composition de polypropylène.

5. Composition de polypropylène selon l'une quelconque des revendications précédentes, dans laquelle l'homopolymère de polypropylène trimodal (tPPH) consiste en

(A-1) 30 à 55 % en poids, sur la base du poids total du tPPH, de la première fraction homopolymère de polypropylène (PPH1)
(A-2) 40 à 60 % en poids, sur la base du poids total du tPPH, de la deuxième fraction homopolymère de polypropylène (PPH2) et

(A-3) 3 à 12 % en poids, sur la base du poids total du tPPH, de la troisième fraction homopolymère de polypropylène (PPH3),
la somme des quantités de PPH1, PPH2 et PPH3 s'additionne jusqu'à 100 % en poids, de préférence l'homopolymère de polypropylène trimodal (tPPH) consiste en
(A-1) 40 à 52 % en poids, sur la base du poids total du tPPH, de la première fraction homopolymère de polypropylène (PPH1)
(A-2) 45 à 58 % en poids, sur la base du poids total du tPPH, de la deuxième fraction homopolymère de polypropylène (PPH2) et
(A-3) 5 à 10 % en poids, sur la base du poids total du tPPH, de la troisième fraction homopolymère de polypropylène (PPH3),
la somme des quantités de PPH1, PPH2 et PPH3 s'additionne jusqu'à 100 % en poids.

**6.** Composition de polypropylène selon l'une quelconque des revendications précédentes, dans laquelle

la première fraction homopolymère de polypropylène (PPH1) possède un indice de fluidité à chaud $MFR_2$ (230 °C, 2,16 kg, ISO 1133-1) dans la plage de 2,0 à 15 g/10 min, de préférence dans la plage de 5,0 à 12,0 g/10 min, la deuxième fraction homopolymère de polypropylène (PPH2) possède un indice de fluidité à chaud $MFR_2$ (230 °C, 2,16 kg, ISO 1133-1) dans la plage de 1,5 à 12 g/10 min, de préférence dans la plage de 2,0 à 8,0 g/10 min et la troisième fraction homopolymère de polypropylène (PPH3) possède un indice de fluidité à chaud $MFR_2$ (230 °C, 2,16 kg, ISO 1133-1) dans la plage de 0,2 à 3,0 g/10 min, de préférence dans la plage de 0,3 à 1,5 g/10 min, où les $MFR_2$ de la première, de la deuxième et de la troisième fraction homopolymère de polypropylène sont différents les uns des autres et où MFR2 de (PPH1) > MFR2 de (PPH2) > MFR2 (PPH3).

**7.** Composition de polypropylène selon l'une quelconque des revendications précédentes, dans laquelle le $MFR_2$ (230 °C, 2,16 kg, ISO 1133-1) final de l'homopolymère de polypropylène trimodal (tPPH) est dans la plage de 1,0 à 12 g/10 min, de préférence dans la plage de 2,0 à 8,0 g/10 min et/ou dans laquelle l'homopolymère de polypropylène trimodal (tPPH) possède une teneur en xylène soluble à froid (XCS), déterminée selon la norme ISO 16152 ; à 25 °C de moins de 3,5 % en poids, de préférence de 3,0 % en poids ou moins et plus préférentiellement de 2,9 % en poids ou moins, respectivement dans la plage de 0,5 à moins de 3,5 % en poids, plus préférentiellement de 1,0 à 3,0 % en poids et de manière davantage préférée de 1,5 à 2,9 % en poids.

**8.** Composition de polypropylène selon l'une quelconque des revendications précédentes, dans laquelle l'homopolymère de polypropylène trimodal (tPPH) de la composition de polypropylène est préparé par un procédé de polymérisation à étapes multiples en présence d'un catalyseur de Ziegler-Natta (ZN-C) comprenant

a) des composés (TC) d'un métal de transition du Groupe 4 à 6 du Tableau périodique des éléments de l'IUPAC, un composé métallique (MC) du Groupe 2 et un donneur interne (ID), dans laquelle ledit donneur interne (ID) est un composé non phtalique,
b) un cocatalyseur (Co), et
c) optionnellement un donneur externe (ED).

**9.** Composition de polypropylène selon la revendication 8, dans laquelle le donneur interne (ID) est sélectionné parmi le groupe consistant en les malonates, les maléates, les succinates, les glutarates, les benzoates et dérivés, chacun optionnellement substitué, et/ou leurs mélanges, de préférence parmi les citraconates optionnellement substitués.

**10.** Composition de polypropylène selon l'une quelconque des revendications précédentes, dans laquelle l'homopolymère de polypropylène trimodal (tPPH) est nucléé post-réacteur avec au moins un agent d'alpha-nucléation.

**11.** Composition de polypropylène selon l'une quelconque des revendications précédentes, dans laquelle l'au moins un agent d'alpha-nucléation est sélectionné parmi l'acide bicyclo-(2.2.1)-heptane-2,3-dicarboxylique, le sel disodique, l'hydroxy-bis[2,4,8,10-tétrakis(1,1 -diméthyléthyl)-6-hydroxy-12H-dibenzo-[d,g]-dioxa-phoshocin-6-oxidato] aluminium, les sels métalliques de 2,2'-méthylène bis(4,6-di-tert-butylphényl)phosphate, de préférence le sodium-2,2'-méthylène-bis(4,6-di-t-butylphényl)phosphate, l'aluminium-hydroxy-bis[2,2'-méthylène-bis(4,6-di-t-butyl-phényl)-phosphate], le sel de lithium de 2,2'-méthylène-bis(2,6-di-tert., butylphényl)phosphate, les agents de nucléation à base de sorbitol, de préférence les di(alkylbenzylidène)sorbitols tels que le 1,3:2,4-25 dibenzylidène sorbitol, le 1,3:2,4-di(4-méthylbenzylidène)sorbitol, le 1,3:2,4-di(4-éthylbenzylidène)sorbitol et le 1,3:2,4-Bis(3,4-diméthylbenzylidène) sorbitol, ainsi que les dérivés de nonitol, de préférence le 1,2,3-tridéoxy-4,6;5,7-bis-O-[(4-propylphényl) méthylène]nonitol, et les benzènetrisamides de préférence les 1,3,5-benzènetrisamides substitués tels que le N, N',

N"-tris-tert-butyl-1,3,5-benzènetricarboxamide, le N,N',N"-tris-cyclohexyl-1,3,5-benzène-tricarboxamide et le N-[3,5-bis-(2,2-diméthyl-propionylamino)-phényl]-2,2-diméthyl-propionamide, dans lequel les sels métalliques de 2,2'-méthylène bis(4,6-di-tert-butylphényl)phosphate, comme le sel de lithium de 2,2'-méthylène bis-(2,6-di-tert-butylphényl)phosphate (par ex. NA-71), l'acide bicyclo-(2.2.1)-heptane-2,3-dicarboxylique, le sel disodique, l'hydroxy-bis[2,4,8,10-tétrakis(1,1 -diméthyléthyl)-6-hydroxy-12H-dibenzo-[d,g]-dioxa-phoshocin-6-oxidato] aluminium sont particulièrement préférés.

**12.** Composition de polypropylène selon la revendication 11, dans laquelle l'au moins un agent d'alpha-nucléation est/sont sélectionné(s) parmi le groupe consistant en le sel de lithium de 2,2'-méthylène bis-(2,6-di-tert-butylphényl) phosphate, l'hydroxy-bis[2,4,8,10-tétrakis(1,1 -diméthyléthyl)-6-hydroxy-12H-dibenzo-[d,g]-dioxa-phoshocin-6-oxidato] aluminium et l'acide bicyclo-(2.2.1)-heptane-2,3-dicarboxylique, le sel disodique

**13.** Utilisation de la composition de polypropylène selon l'une quelconque des revendications précédentes pour la production de films, notamment de films soufflés.

**14.** Film, de préférence un film soufflé, comprenant au moins 70,0 % en poids, de préférence comprenant au moins 80,0 % en poids, plus préférentiellement comprenant au moins 90,0 % en poids, encore plus préférentiellement comprenant au moins 95,0 % en poids, toujours plus préférentiellement comprenant au moins 99,0 % en poids, de la composition de polypropylène selon l'une quelconque des revendications 1 à 9 précédentes.

**15.** Film soufflé selon la revendication 14, le film soufflé ayant un module de traction dans la direction machine, tel que déterminé conformément à la norme ISO 527-3 sur un film soufflé de 50 μm, de 1700 à 2900 MPa, plus préférentiellement de 1800 à 2600 MPa, et de manière préférée entre toutes de 1900 à 2400 MPa et une valeur de trouble, telle que déterminée conformément à la norme ASTM D1003 sur un film soufflé de 50 μm, de 0 à 25 %, plus préférentiellement de 5 à 20 %, et de manière préférée entre toutes de 10 à 18 %.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2514770 A1
- EP 3945112 A
- WO 2017148970 A1
- WO 2012007430 A
- EP 2610271 A
- EP 261027 A
- EP 2610272 A
- EP 887379 A
- WO 9212182 A
- WO 2004000899 A
- WO 2004111095 A
- WO 9924478 A
- WO 9924479 A
- WO 0068315 A
- EP 3562850 A


### Non-patent literature cited in the description


- **HANS ZWEIFEL**. Plastics Additives Handbook, 967-990
- Polypropylene Handbook. Hanser, 2005
- **ZHOU, Z** ; **KUEMMERLE, R.** ; **QIU, X.** ; **REDWINE, D** ; **CONG, R** ; **TAHA, A.** ; **BAUGH, D** ; **WINNIFORD, B**. *J. Mag. Reson*, 2007, vol. 187, 225
- **BUSICO, V.** ; **CARBONNIERE, P** ; **CIPULLO, R.** ; **PELLECCHIA, R** ; **SEVERN, J.** ; **TALARICO, G.** *Macromol. Rapid Commun.*, 2007, vol. 28, 11289
- **RESCONI, L.** ; **CAVALLO, L.** ; **FAIT, A** ; **PIEMONTESI, F**. *Chem. Rev.*, 2000, vol. 100, 1253
- **CHENG, H. N.** *Macromolecules*, 1984, vol. 17, 1950
- **WANG, W-J.** ; **ZHU, S**. *Macromolecules*, 2000, vol. 33, 1157
- **WANG, W-J** ; **ZHU, S**. *Macromolecules*, 2000, vol. 33, 1157